# EUROPEAN PATENT APPLICATION

(11) **EP 3 978 786 A1**
(43) Date of publication of application: **06.04.2022**
(21) Application number: 20814465.9
(22) Date of filing: 24.04.2020
(51) Int. Cl.: F16J 15/18, F16J 15/24

(54) **SEALING DEVICE**

(30) Priority: 27.05.2019 JP 2019098234
(71) Applicant: NOK Corporation, Minato-ku, Tokyo 105-8585 (JP)
(72) Inventor: OKABE Hitoshi, Kitaibaraki-shi, Ibaraki 319-1535 (JP); ARAKI Toru, Kitaibaraki-shi, Ibaraki 319-1535 (JP)
(74) Representative: TBK
(86) International application number: PCT/JP2020/017589
(87) International publication number: WO 2020/241135

(57) **Abstract**

A sealing device is disposed within a circumferential groove of an inner member that reciprocates relative to an outer member. An inner seal ring of the sealing device is made of a resin and includes an outer peripheral surface having a circumferential groove. An outer seal ring of the sealing device has a high elasticity and is fitted into the circumferential groove of the inner seal ring. The outer seal ring is brought into slidable contact with the inner peripheral surface of the hole of the outer member. A back ring of the sealing device has a high elasticity, is disposed radially inside the inner seal ring, and is compressed between the inner peripheral surface of the inner seal ring and the bottom wall surface of the circumferential groove of the inner member. Inclined surfaces are formed at both ends of the outer peripheral surface of the inner seal ring in the axial direction of the inner seal ring, each of the inclined surfaces having a diameter that decreases as a distance from a center of the outer peripheral surface of the inner seal ring in the axial direction increases. Protruding annular portions are formed at both ends of the inner peripheral surface of the inner seal ring in the axial direction, the protruding annular portions protruding radially inward to restrict movement of the back ring in the axial direction.

## Description

### TECHNICAL FIELD

The present invention relates to sealing devices having inner seal rings, outer seal rings, and back rings.

### BACKGROUND ART

Patent Document 1 discloses a sealing device having an inner seal ring, an outer seal ring, and a back ring.

### BACKGROUND DOCUMENT(S)

### Patent Document(s)

Patent Document 1: JP-B-6371570

### SUMMARY OF THE INVENTION

For this kind of sealing device, it is desirable that degradation of sealing ability be prevented as much as possible.

Accordingly, the present invention provides a sealing device in which degradation of sealing ability is minimized.

According to an aspect of the present invention, there is provided a sealing device that is to be disposed within a circumferential groove of an inner member reciprocating relative to an outer member and brought into contact with an inner peripheral surface of a hole of the outer member to separate one space from another space. The sealing device includes: an inner seal ring made of a resin including an outer peripheral surface having a circumferential groove, and an inner peripheral surface; an outer seal ring having an elasticity higher than that of a material of the inner seal ring, the outer seal ring being fitted into the circumferential groove of the inner seal ring, and including an outer portion protruding radially outward from the circumferential groove of the inner seal ring and being to be in slidable contact with an inner peripheral surface of the hole of the outer member; and a back ring having an elasticity higher than that of the material of the inner seal ring, the back ring being disposed radially inside the inner seal ring, and being to be compressed between the inner peripheral surface of the inner seal ring and a bottom wall surface of the circumferential groove of the inner member. Inclined surfaces are formed at both ends of the outer peripheral surface of the inner seal ring in an axial direction of the inner seal ring, each of the inclined surfaces having a diameter that decreases as a distance from a center of the outer peripheral surface of the inner seal ring in the axial direction increases. Protruding annular portions are formed at both ends of the inner peripheral surface of the inner seal ring in the axial direction, the protruding annular portions protruding radially inward to restrict movement of the back ring in the axial direction.

In this aspect, the outer seal ring, which slides on the inner peripheral surface of the hole of the outer member undergoes abrasion, resulting in that the outer peripheral surface of the inner seal ring comes into contact with the inner peripheral surface of the hole of the outer member. Since the inner seal ring has inclined surfaces formed at both ends of the outer peripheral surface thereof in the axial direction, if the abrasion of the outer seal ring progresses and the back ring is biased in the axial direction within the circumferential groove of the inner member, an end of the inner seal ring in the axial direction, at which an inclined surface is formed, is pressed radially outward by the back ring and is significantly deformed elastically. Then, the sealing ability of the sealing device is degraded. However, in this aspect, the protruding annular portions formed at both ends in the axial direction of the inner peripheral surface of the inner seal ring restrict the axial movement of the back ring. Therefore, the back ring is prevented from being biased in the axial direction within the circumferential groove of the inner member, and the elastic deformation of one end in the axial direction of the inner seal ring is also minimized. Accordingly, degradation of sealing ability of the sealing device is also minimized.

### BRIEF DESCRIPTION OF THE DRAWINGS

Fig. 1 is a side view of a sealing device according to an embodiment of the present invention;
Fig. 2 is a front view of the sealing device of Fig. 1;
Fig. 3 is a side cross-sectional view showing a portion of the sealing device of Fig. 1 in a state of use;
Fig. 4 is a side cross-sectional view showing a portion of a sealing device of a comparative example;
Fig. 5 is a side cross-sectional view showing a portion of the sealing device of the comparative example in which the outer seal ring has undergone abrasion;
Fig. 6 is a side cross-sectional view showing the portion of the sealing device of the comparative example in which the outer seal ring has undergone further abrasion;
Fig. 7 is a side cross-sectional view showing the portion of the sealing device of Fig. 1 in which the outer seal ring has undergone abrasion; and
Fig. 8 is a side view of a sealing device according to a variation of the embodiment.

### DESCRIPTION OF EMBODIMENTS

Hereinafter, with reference to the accompanying drawings, an embodiment according to the present invention will be described. It is of note that the drawings are not necessarily to scale, and certain features may be exaggerated or omitted.

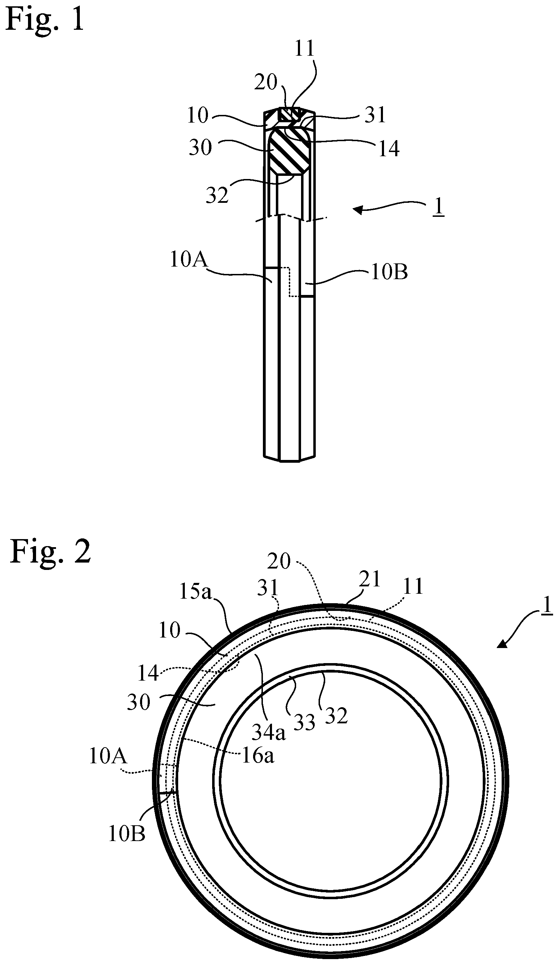

As shown in Figs. 1 to 3, a sealing device 1 according to the embodiment includes an inner seal ring 10, an outer seal ring 20, and a back ring 30. In the upper part of Fig. 1, cross sections of the inner seal ring 10, the outer seal ring 20, and the back ring 30 are shown.

The inner seal ring 10 is a ring made of a resin and has an outer peripheral surface and an inner peripheral surface that are concentric with each other. The diameter of the central part in the axial direction of the outer peripheral surface is large, and the diameters of the ends in the axial direction of the outer peripheral surface are small. The diameter of the central part in the axial direction of the inner peripheral surface is large, and the diameters of the ends in the axial direction of the inner peripheral surface are small.

The inner seal ring 10 is formed of a resin having high strength, i.e., high rigidity, such as polyamide, polyacetal, polyethylene, polyimide, or PEEK (polyether ether ketone). The tensile strength of the material of the inner seal ring 10 is, preferably, 40 MPa or more.

A circumferential groove 11 is formed on the outer peripheral surface of the inner seal ring 10. The circumferential groove 11 has two side wall surfaces that are parallel to each other and are perpendicular to the axial direction of the sealing device 1. The circumferential groove 11 has a uniform depth over the entire circumference. In other words, the circumferential groove 11 has a bottom wall surface that is concentric to the cylindrical inner peripheral surface 14 of the inner seal ring 10.

The outer seal ring 20 is fitted into the circumferential groove 11 of the inner seal ring 10. However, the difference between the initial outer radius and the inner radius of the outer seal ring 20 is greater than the depth of the circumferential groove 11, and therefore, the outer portion 21 of the outer seal ring 20 in radial directions protrudes radially outward from the circumferential groove 11.

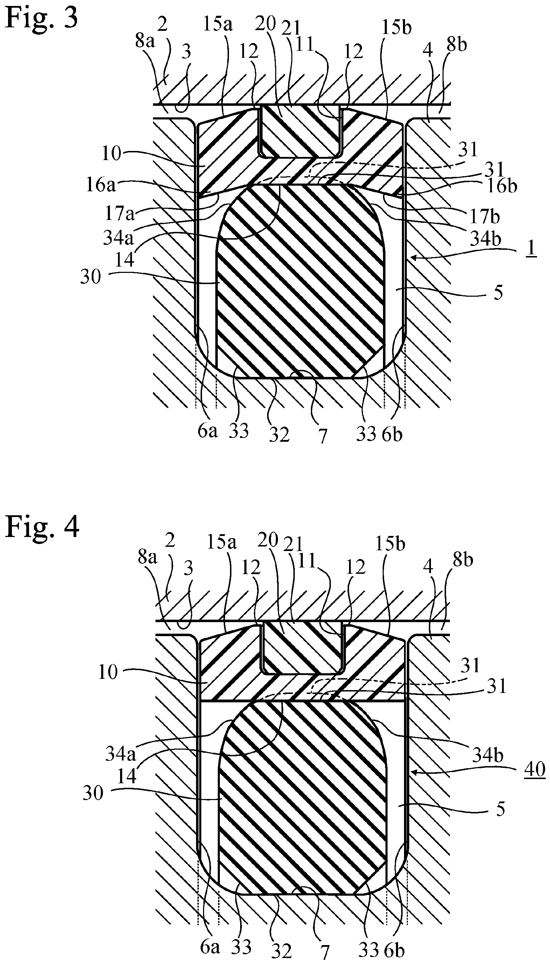

The outer seal ring 20 is an endless ring having an outer peripheral surface and an inner peripheral surface that are concentric with each other. As shown in Figs. 1 and 3, the outer seal ring 20 has a cross section that is approximately rectangular. In other words, the outer seal ring 20 has side wall surfaces, which are parallel to the side wall surfaces of the circumferential groove 11, and an inner peripheral surface and an outer peripheral surface, which are concentric to the bottom wall surface of the circumferential groove 11. The outer peripheral surface of the outer seal ring 20 has a uniform diameter over the entire length along the axial direction, and the inner peripheral surface also has a uniform diameter over the entire length in the axial direction. In an initial stage, the radial outer portion 21 of the outer seal ring 20 protrudes from the circumferential groove 11, so that the outer peripheral surface of the outer seal ring 20 is located radial outside the outermost end 12 of the inner seal ring 10.

The outer seal ring 20 is formed of a material that has an elasticity higher than that of the material of the inner seal ring 10. For example, the outer seal ring 20 may be formed of an elastomer. However, the outer seal ring 20 is preferably formed of a material that has a much lower frictional coefficient than that of the material of the inner seal ring 10. Such materials include, for example, polytetrafluoroethylene (PTFE), perfluoroalkoxy alkane resin (PFA), tetrafluoroethylene-hexafluoropropylene copolymer (FEP), tetrafluoroethylene-ethylene copolymer (ETFE), urethane, and polyamide.

The back ring 30 is an endless ring disposed radial inside the inner seal ring 10, and has an outer peripheral surface 31 and an inner peripheral surface 32 that are concentric with each other.

The back ring 30 is formed of a material that has an elasticity higher than that of the material of the inner seal ring 10. For example, the back ring 30 is formed of an elastomer or urethane.

In this embodiment, the sealing device 1 is used as a piston seal in an oil-hydraulic cylinder. As shown in Fig. 3, the hydraulic cylinder has a stationary cylinder tube (outer member) 2 and a piston (inner member) 4 disposed inside a hole of the cylinder tube 2. The piston 4 reciprocates relative to the cylinder tube 2 along the axial direction of the piston 4 (transverse direction in Fig. 3). The cylinder tube 2 and the piston 4 are made of a material having a rigidity higher than that of the sealing device 1, for example, a metal.

A circumferential groove 5 is formed on the outer peripheral surface of the piston 4. The circumferential groove 5 has two side wall surfaces 6a and 6b, which are parallel to each other and are perpendicular to the axial direction of the piston 4. The distance between the side wall surfaces 6a and 6b is greater than the maximum length of the sealing device 1 in the axial direction (the distance between the two side wall surfaces of the inner seal ring 10). The circumferential groove 5 has a uniform depth over the entire circumference. In other words, the circumferential groove 5 has a bottom wall surface 7 that is concentric to the outer peripheral surface of the piston 4.

The sealing device 1 is disposed within the circumferential groove 5 of the piston 4 and is brought into contact with the inner peripheral surface 3 of the hole of the cylinder tube 2 to separate one space from another space. In the following description, it is assumed that in the drawings showing the sealing device 1, the cylinder tube 2, and the piston 4 (e.g., Fig. 3), the left side for the sealing device 1 is an oil storage space and the right side for the sealing device 1 is another oil storage space. The inner diameter of the hole of the cylinder tube 2 is greater than the outer diameter of the piston 4, so that there are a clearance 8a (communicating with an oil storage space) and another clearance 8a (communicating with another oil storage space) between the inner peripheral surface 3 of the hole of the cylinder tube 2 and the outer peripheral surface of the piston 4. The sealing device 1 limits the leakage of oil from the clearance 8a to the clearance 8b and in the opposite direction.

As shown in Fig. 3, when the sealing device 1 is deployed in the operating location, the inner peripheral surface 32 of the back ring 30, which is disposed radial inside the inner seal ring 10, is brought into surface contact with the bottom wall surface 7 of the circumferential groove 5 of the piston 4. The outer peripheral surface 31 of the back ring 30 is brought into surface contact with the cylindrical inner peripheral surface 14 of the inner seal ring 10. In this state, the back ring 30, which has a higher elasticity than that of the inner seal ring 10, is compressed between the inner peripheral surface 14 of the inner seal ring 10 and the bottom wall surface 7 of the circumferential groove 5 of the piston 4. Therefore, the back ring 30 exerts a pressing force on the inner seal ring 10 and thus on the outer seal ring 20, which causes the inner seal ring 10 and thus the outer seal ring 20 to expand radially outward.

In this state, the outermost end 12 of the inner seal ring 10 is not in contact with the inner peripheral surface 3 of the hole of the cylinder tube 2, but the outer peripheral surface 20 of the outer seal ring 20, which is located radial outside the outermost end 12 of the inner seal ring 10, is brought into surface contact with the inner peripheral surface 3 of the hole of the cylinder tube 2. The outer seal ring 20 is compressed between the bottom wall surface of the circumferential groove 11 of the inner seal ring 10 and the inner peripheral surface 3 of the hole of the cylinder tube 2. The outer peripheral surface of the outer seal ring 20 slides on the inner peripheral surface 3 when the piston 4 reciprocates.

Inclined surfaces 33 are formed at both ends of the inner peripheral surface 32 of the back ring 30 in the axial direction. The inclined surfaces 33 facilitate deploying the back ring 30 around the piston 4 and deploying the back ring 30 within the circumferential groove 5.

The outer peripheral surface 31 of the back ring 30 may have a uniform diameter over the entire length in the axial direction. However, inclined surfaces 34a and 34b are preferably formed at at least both ends of the outer peripheral surface 31 in the axial direction, and each of the inclined surfaces 34a and 34b of the back ring 30 has a diameter that decreases as a distance from a center of the outer peripheral surface 31 of the back ring 30 in the axial direction increases. In this embodiment, the inclined surfaces 34a and 34b are curved in the shape of arcs when viewed from lateral, but they may be straight. In this embodiment, as shown by the phantom line in Fig. 3, in the initial state, the outer peripheral surface 31 has an almost semicircular contour and both ends thereof are arc-shaped inclined surfaces 34a and 34b. In the state of use of the sealing device 1, the central part in the axial direction of the outer peripheral surface 31 is compressed by the inner peripheral surface 14 of the inner seal ring 10, as shown by the solid line in Fig. 3.

Whereas the outer seal ring 20 and the back ring 30 are endless rings, the inner seal ring 10 is a ring composed of a bar of which two ends 10A and 10B are butted together (see Fig. 1 and Fig. 2). Therefore, although the inner seal ring 10 has high rigidity, the inner seal ring 10 can be easily deployed within the circumferential groove 5 of the piston 4. The shapes of the ends 10A and 10B are known as disclosed in Fig. 9 of Patent Document 1. The shapes of the ends 10A and 10B in the embodiment are only exemplary. The shapes of the ends of the inner seal ring 10 are not limited to the illustrated shapes, and may be any of a straight cut, a bias cut, or any other cut.

As shown in Fig. 3, inclined surfaces 15a and 15b are formed at both ends in the axial direction of the outer peripheral surface of the inner seal ring 10. Each of the inclined surfaces 15a and 15b has a diameter that decreases as a distance from a center of the outer peripheral surface of the inner seal ring 10 in the axial direction increases. Therefore, as described below, after the outer portion 21 of the outer seal ring 20 has undergone attrition, it takes some time before the entirety of the outer peripheral surface of the inner seal ring 10 is in contact with the inner peripheral surface 3 of the hole of the cylinder tube 2.

At both ends of the inner peripheral surface 14 of the inner seal ring 10 in the axial direction, protruding annular portions 16a and 16b are formed. The protruding annular portions 16a and 16b protrude radially inward. In this embodiment, the protruding annular portions 16a and 16b have straight inclined surfaces 17a and 17b, respectively, when viewed from lateral, and each of the inclined surfaces 17a and 17b has a diameter that decreases as a distance from a center of the inner peripheral surface 14 of the inner seal ring 10 in the axial direction increases. Between the protruding annular portions 16a and 16b, the outer peripheral surface 31 of the back ring 30 is in surface contact with the inner peripheral surface 14 of the inner seal ring 10. In other words, there is a contact area between the back ring 30 and the inner seal ring 10 between the protruding annular portions 16a and 16b, which protrude radially inward. Thus, the protruding annular portions 16a and 16b restrict movement of the back ring 30 in the axial direction.

Advantages of the sealing device 1 according to the embodiment will be described. For the sake of comparison, Fig. 4 shows a sealing device 40 according to a comparative example in the state of use.

The entirety of the inner peripheral surface 14 of the inner seal ring 10 of the sealing device 40 is a cylindrical surface and has a uniform diameter over the entire length in the axial direction. In other words, the inner peripheral surface 14 of the inner seal ring 10 in the sealing device 40 is not provided with protruding annular portions 16a and 16b, which restrict the movement of the back ring 30 in the axial direction. Other features of the sealing device 40 are the same as those of the sealing device 1 according to the embodiment.

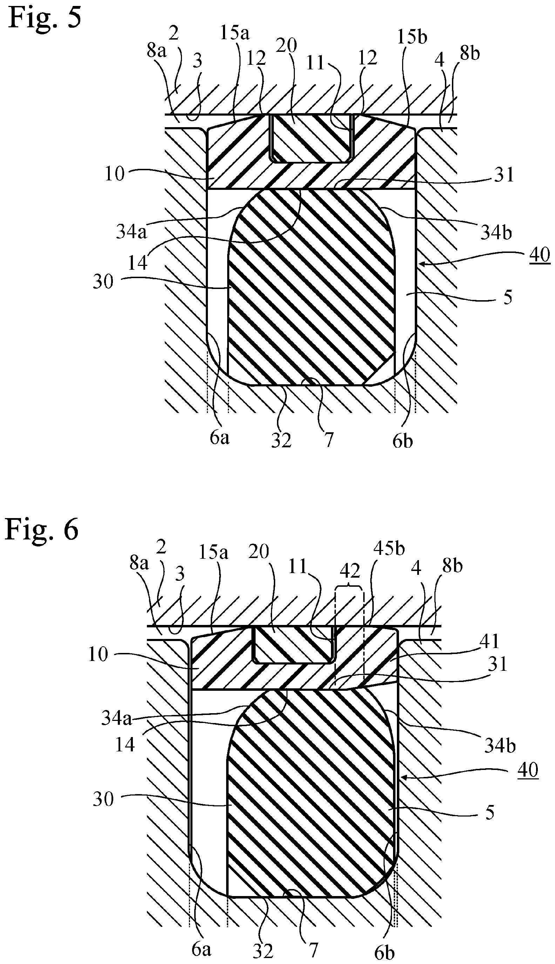

As shown in Fig. 5, during the use of the sealing device 1 or 40, the outer portion 21 of the outer seal ring 20, which slides on the inner peripheral surface 3 of the hole of the cylinder tube 2, undergoes abrasion, resulting in that the outer peripheral surface of the inner seal ring 10 comes into contact with the inner peripheral surface 3 of the hole of the cylinder tube 2. This is because during the use of the sealing device 1 or 40, the back ring 30 continuously exerts a pressure on the inner seal ring 10, which causes the inner seal ring 10 to expand radially outward. In Fig. 5, the outermost end 12 of the inner seal ring 10 is in contact with the inner peripheral surface 3.

As the attrition of the outer seal ring 20 progresses, as shown in Fig. 6, the outer peripheral surface of the inner seal ring 10 also abrades by sliding on the inner peripheral surface 3 of the hole of the cylinder tube 2. In the sealing device 40 of the comparative example, the inner peripheral surface 14 of the inner seal ring 10 is not provided with protruding annular portions 16a and 16b that restrict the movement of the back ring 30 in the axial direction. Accordingly, as the piston 4 reciprocates, the back ring 30 is biased in the axial direction within the circumferential groove 5 of the piston 4.

Fig. 6 shows that the back ring 30 approaches one side wall surface 6b of the circumferential groove 5. Since the back ring 30 exerts a pressing force on the inner seal ring 10 to cause it to expand radially outward, an end 41 of the inner seal ring 10 that is close to the side wall surface 6b of the circumferential groove 5 is pressed by the biased back ring 30 and is elastically deformed radially outward to a large extent. Thus, a large area of a surface 45b, which was the inclined surface 15b, of the outer peripheral surface of the inner seal ring 10, comes into contact with the inner peripheral surface 3 of the hole of the cylinder tube 2. This results in that the cylinder tube 2 gives a large sliding resistance to the inner seal ring 10, and thus to the piston 4. In addition, the abrasion of the surface 45b of the inner seal ring 10 is accelerated. Furthermore, in the contact area 42 between the end 41 of the inner seal ring 10 and the back ring 30, the compression of the back ring 30 is weakened, and there is concern that the sealing ability of the sealing device 40 may be degraded in the contact area 42.

Conversely to Fig. 6, when the back ring 30 approaches the other side surface 6a of the circumferential groove 5, the other end of the inner seal ring 10 that is close to the side surface 6a of the circumferential groove 5 is pressed by the biased back ring 30 and is elastically deformed radially outward to a large extent. Thus, a large area of the inclined surface 15a of the outer peripheral surface of the inner seal ring 10 comes into contact with the inner peripheral surface 3 of the hole of the cylinder tube 2. Therefore, a similar concern arises in the vicinity of the side wall surface 6a. In addition, the movement of the back ring 30 relative to the inner seal ring 10 may cause the outer peripheral surface 31 of the back ring 30 to abrade and may degrade the sealing ability in the entire contact area between the inner seal ring 10 and the back ring 30.

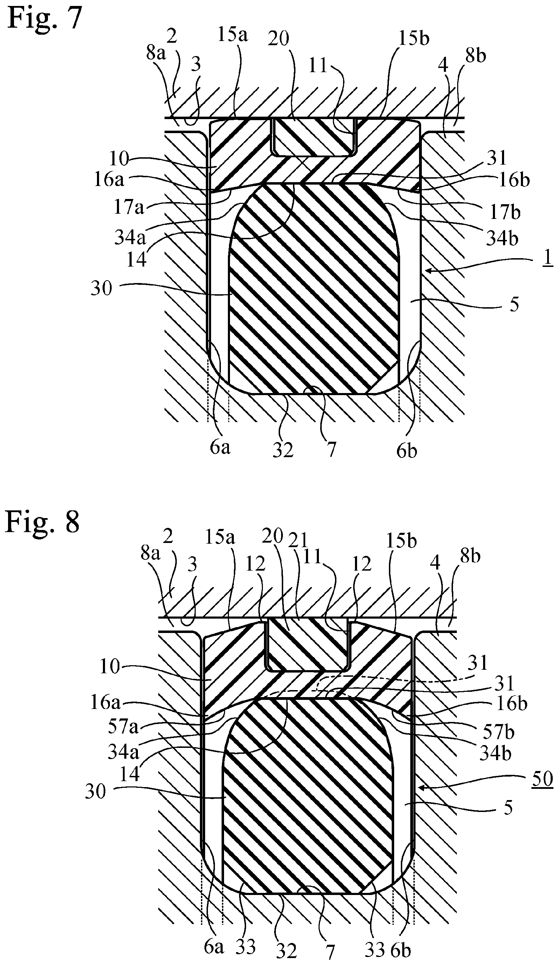

However, in the sealing device 1 according to the embodiment, the protruding annular portions 16a and 16b formed at both ends in the axial direction of the inner peripheral surface 14 of the inner seal ring 10 restrict the movement of the back ring 30 in the axial direction. Thus, as shown in Fig. 7, even if the abrasion of the outer seal ring 20 progresses, the back ring 30 is prevented from being biased in the axial direction within the circumferential groove 5 of piston 4. Therefore, local abrasion of the outer peripheral surface of the inner seal ring 10 is not accelerated, and the elastic deformation of an axial end of the inner seal ring 10 is minimized, and the degradation of sealing ability of the sealing device 1 is also minimized.

In the sealing device 1 according to the embodiment, inclined surfaces 34a and 34b are formed at at least both ends of the outer peripheral surface 31 of the back ring 30 in the axial direction, and each of the inclined surfaces 34a and 34b has a diameter that decreases as a distance from a center of the outer peripheral surface 31 in the axial direction increases. Therefore, the back ring 30 can be easily deployed radial inside the inner seal ring 10, which has protruding annular portions 16a and 16b formed on the inner peripheral surface 14 thereof, and the positioning of the back ring 30 relative to the inner seal ring 10 is also easy.

In the sealing device 1 according to the embodiment, each of the protruding annular portions 16a and 16b has an inner diameter that decreases as a distance from a center of the inner peripheral surface 14 of the inner seal ring 10 in the axial direction increases. Therefore, when the back ring 30 moves in the axial direction, the outer peripheral surface 31 of the back ring 30 easily comes into surface contact with the protruding annular portions 16a and 16b of the inner peripheral surface 14 of the inner seal ring 10, so that the sealing ability of the sealing device 1 is ensured.

The present invention has been shown and described with reference to preferred embodiments thereof. However, it will be understood by those skilled in the art that various changes in form and detail may be made without departing from the scope of the invention as defined by the claims. Such variations, alterations, and modifications are intended to be encompassed in the scope of the present invention.

For example, in the above embodiment, the protruding annular portions 16a and 16b of the inner peripheral surface 14 of the inner seal ring 10 have straight inclined surfaces 17a and 17b, respectively, when viewed from lateral. However, as shown in Fig. 8 in a sealing device 50 in accordance with a variation of the embodiment, the protruding annular portions 16a and 16b of the inner peripheral surface 14 of the inner seal ring 10 may have arc-shaped inclined surfaces 57a and 57b, respectively when viewed from lateral. Each of the inclined surfaces 57a and 57b has a diameter that decreases as a distance from a center of the inner peripheral surface 14 in the axial direction increases. The shapes of the protruding annular portions 16a and 16b are not limited to those shown in the drawings and may be other shapes.

In the above embodiment, the sealing device 1 is used as a piston seal in an oil-hydraulic cylinder, in which the piston 4 (inner member) moves relative to the cylinder tube 2 (stationary outer member), but may be used for other types of oil-hydraulic or water-hydraulic machine. The inner member in which the sealing device 1 is deployed may be stationary and the outer member may move back and forth relative the inner member. Alternatively, both the inner member and the outer member may move so that the inner member and the outer member move back and forth relative to each other.

Aspects of the present invention are also set out in the following numbered clauses:
Clause 1. A sealing device that is to be disposed within a circumferential groove of an inner member reciprocating relative to an outer member and brought into contact with an inner peripheral surface of a hole of the outer member to separate one space from another space, the sealing device including:
   an inner seal ring made of a resin including an outer peripheral surface having a circumferential groove, and an inner peripheral surface;
   an outer seal ring having an elasticity higher than that of a material of the inner seal ring, the outer seal ring being fitted into the circumferential groove of the inner seal ring, and including an outer portion protruding radially outward from the circumferential groove of the inner seal ring and being to be in slidable contact with an inner peripheral surface of the hole of the outer member; and
   a back ring having an elasticity higher than that of the material of the inner seal ring, the back ring being disposed radially inside the inner seal ring, and being to be compressed between the inner peripheral surface of the inner seal ring and a bottom wall surface of the circumferential groove of the inner member,
   inclined surfaces being formed at both ends of the outer peripheral surface of the inner seal ring in an axial direction of the inner seal ring, each of the inclined surfaces having a diameter that decreases as a distance from a center of the outer peripheral surface of the inner seal ring in the axial direction increases,
   protruding annular portions being formed at both ends of the inner peripheral surface of the inner seal ring in the axial direction, the protruding annular portions protruding radially inward to restrict movement of the back ring in the axial direction.
Clause 2. The sealing device according to clause 1, wherein the back ling includes an outer peripheral surface being in surface contact with the inner peripheral surface of the inner seal ring, the outer peripheral surface of the back ring being in surface contact with the inner peripheral surface of the inner seal ring at a location between the protruding annular portions of the inner seal ring.
Clause 3. A sealing device that is to be disposed within a circumferential groove of an inner member reciprocating relative to an outer member, the sealing device including:
   an inner seal ring made of a resin including an outer peripheral surface having a circumferential groove, and an inner peripheral surface;
   an outer seal ring having an elasticity higher than that of a material of the inner seal ring, the outer seal ring being fitted into the circumferential groove of the inner seal ring, and including an outer portion protruding radially outward from the circumferential groove of the inner seal ring; and
   a back ring having an elasticity higher than that of the material of the inner seal ring, the back ring being disposed radially inside the inner seal ring, and including an outer peripheral surface being in surface contact with the inner peripheral surface of the inner seal ring,
   inclined surfaces being formed at both ends of the outer peripheral surface of the inner seal ring in an axial direction of the inner seal ring, each of the inclined surfaces having a diameter that decreases as a distance from a center of the outer peripheral surface of the inner seal ring in the axial direction increases,
   protruding annular portions being formed at both ends of the inner peripheral surface of the inner seal ring in the axial direction, the protruding annular portions protruding radially inward, the outer peripheral surface of the back ring being in surface contact with the inner peripheral surface of the inner seal ring at a location between the protruding annular portions.
Clause 4. The sealing device according to any one of clauses 1-3, wherein inclined surfaces are formed at at least both ends of the outer peripheral surface of the back ring in the axial direction, each of the inclined surfaces of the back ring having a diameter that decreases as a distance from a center of the outer peripheral surface of the back ring in the axial direction increases.

According to this clause, it is easy to deploy the back ring radial inside the inner seal ring having the protruding annular portions formed on the inner peripheral surface thereof, and it is also easy to position the back ring relative to the inner seal ring.

Clause 4. The sealing device according to any one of clauses 1-4, wherein each of the protruding annular portions has an inner diameter that decreases as a distance from a center of the inner peripheral surface of the inner seal ring in the axial direction increases.

According to this clause, when the back ring moves in the axial direction, the outer peripheral surface of the back ring is likely to be in surface contact with a protruding annular portion of the inner peripheral surface of the inner seal ring, so that the sealing ability of the sealing device is ensured.

### REFERENCE SYMBOLS

1, 50: Sealing device
2: Cylinder tube (outer member)
3: Inner peripheral surface
4: Piston (inner member)
5: Circumferential groove
10: Inner seal ring
11: Circumferential groove
14: Inner peripheral surface
15a, 15b: Inclined surface
16a, 16b: Protruding annular portion
20: Outer seal ring
21: Outer portion
30: Back ring
31: Outer peripheral surface
32: Inner peripheral surface
33: Inclined surface
34a, 34b: Inclined surface

## Claims

1. A sealing device that is to be disposed within a circumferential groove of an inner member reciprocating relative to an outer member and brought into contact with an inner peripheral surface of a hole of the outer member to separate one space from another space, the sealing device comprising:
an inner seal ring made of a resin comprising an outer peripheral surface having a circumferential groove, and an inner peripheral surface;
an outer seal ring having an elasticity higher than that of a material of the inner seal ring, the outer seal ring being fitted into the circumferential groove of the inner seal ring, and comprising an outer portion protruding radially outward from the circumferential groove of the inner seal ring and being to be in slidable contact with an inner peripheral surface of the hole of the outer member; and
a back ring having an elasticity higher than that of the material of the inner seal ring, the back ring being disposed radially inside the inner seal ring, and being to be compressed between the inner peripheral surface of the inner seal ring and a bottom wall surface of the circumferential groove of the inner member,
inclined surfaces being formed at both ends of the outer peripheral surface of the inner seal ring in an axial direction of the inner seal ring, each of the inclined surfaces having a diameter that decreases as a distance from a center of the outer peripheral surface of the inner seal ring in the axial direction increases,
protruding annular portions being formed at both ends of the inner peripheral surface of the inner seal ring in the axial direction, the protruding annular portions protruding radially inward to restrict movement of the back ring in the axial direction.

2. The sealing device according to claim 1, wherein inclined surfaces are formed at at least both ends of the outer peripheral surface of the back ring in the axial direction, each of the inclined surfaces of the back ring having a diameter that decreases as a distance from a center of the outer peripheral surface of the back ring in the axial direction increases.

3. The sealing device according to claim 1 or 2, wherein each of the protruding annular portions has an inner diameter that decreases as a distance from a center of the inner peripheral surface of the inner seal ring in the axial direction increases.

4. A sealing device that is to be disposed within a circumferential groove of an inner member reciprocating relative to an outer member, the sealing device comprising:
an inner seal ring made of a resin comprising an outer peripheral surface having a circumferential groove, and an inner peripheral surface;
an outer seal ring having an elasticity higher than that of a material of the inner seal ring, the outer seal ring being fitted into the circumferential groove of the inner seal ring, and comprising an outer portion protruding radially outward from the circumferential groove of the inner seal ring; and
a back ring having an elasticity higher than that of the material of the inner seal ring, the back ring being disposed radially inside the inner seal ring, and comprising an outer peripheral surface being in surface contact with the inner peripheral surface of the inner seal ring,
inclined surfaces being formed at both ends of the outer peripheral surface of the inner seal ring in an axial direction of the inner seal ring, each of the inclined surfaces having a diameter that decreases as a distance from a center of the outer peripheral surface of the inner seal ring in the axial direction increases,
protruding annular portions being formed at both ends of the inner peripheral surface of the inner seal ring in the axial direction, the protruding annular portions protruding radially inward, the outer peripheral surface of the back ring being in surface contact with the inner peripheral surface of the inner seal ring at a location between the protruding annular portions.

5. The sealing device according to claim 4, wherein inclined surfaces are formed at at least both ends of the outer peripheral surface of the back ring in the axial direction, each of the inclined surfaces of the back ring having a diameter that decreases as a distance from a center of the outer peripheral surface of the back ring in the axial direction increases.

6. The sealing device according to claim 4 or 5, wherein each of the protruding annular portions has an inner diameter that decreases as a distance from a center of the inner peripheral surface of the inner seal ring in the axial direction increases.
